# EUROPÄISCHE PATENTSCHRIFT

(11) **EP 3 533 912 B1**
(45) Veröffentlichungstag und Bekanntmachung des Hinweises auf die Patenterteilung: **14.09.2022**
(21) Anmeldenummer: 19155509.3
(22) Anmeldetag: 05.02.2019
(51) Int. Cl.: D01G 23/02

(54) **SPEICHERVORRICHTUNG FÜR FASERMATERIAL MIT EINER REINIGUNGSEINHEIT**
STORAGE DEVICE FOR FIBRE MATERIAL WITH A CLEANING UNIT
DISPOSITIF DE STOCKAGE POUR MATIÈRE FIBREUSE DOTÉ D'UNE UNITÉ DE NETTOYAGE

(30) Priorität: 08.02.2018 DE 102018102860
(43) Veröffentlichungstag der Anmeldung: 04.09.2019
(73) Patentinhaber: TEMAFA Maschinenfabrik GmbH, 51469 Bergisch Gladbach (DE)
(72) Erfinder: Morgner, Jörg, 51515 Kürten (DE)
(74) Vertreter: Canzler & Bergmeier Patentanwälte Partnerschaft mbB

(56) Entgegenhaltungen:
- EP-A2- 2 028 297
- DE-U1- 7 803 047
- GB-A- 1 133 063
- JP-U- H02 106 472
- US-A- 2 253 698
- US-A- 3 486 309

## Beschreibung

Die vorliegende Erfindung betrifft eine Speichervorrichtung für eine Vorrichtung zum Vorbereiten und/oder Speisen von Fasermaterial, insbesondere zur Vliesherstellung, mit einem Speicherschacht zum Zwischenspeichern von Fasermaterial, der ein Schachtgehäuse mit einem Speicherraum und eine in den Speicherraum führende Zuleitung aufweist, über die das Fasermaterial pneumatisch mit einer Förderluft in den Speicherraum förderbar ist, mit einer Reinigungseinheit zum Reinigen der im Speicherraum befindlichen verunreinigten Förderluft, die ein Reinigungsgehäuse mit einem Reinigungsraum umfasst, und mit einer im Förderluftstrom zwischen dem Speicherraum und dem Reinigungsraum angeordneten teildurchlässigen Trennwand, die das Fasermaterial im Speicherraum zurückhält und die verunreinigte Förderluft in den Reinigungsraum einströmen lässt, wobei die Reinigungseinheit ein im Förderluftstrom zwischen dem Reinigungsraum und der Umgebung angeordnetes Filterelement aufweist, über das Verunreinigungen der Förderluft im Reinigungsraum zurückgehalten werden können und die gefilterte Förderluft in die Umgebung austreten kann. Des Weiteren betrifft die Erfindung eine Vorrichtung zum Vorbereiten und/oder Speisen von Fasermaterial für eine Textilanlage mit einer derartigen Speichervorrichtung.

Aus der GB 1 133 063 A ist ein Behälter zum Zuführen von Fasern und ähnlichem Material zu einer vorbereitenden Textilbehandlungsmaschine bekannt, die einen Schacht umfasst, über dem ein Zuführkopf angeordnet ist, in den ein pneumatisches Förderrohr führt, wobei mindestens eine Wand des Kopfes luftdurchlässig ist, durch die die Förderluft in einen Windkasten gelangt, an dessen Auslass ein Staubbeutel hängend und lösbar befestigt ist.

Aus der DE 78 03 047 U1 ist eine Vorrichtung zum Beschicken einer Karde bekannt. Dies erfolgt mittels eines Schachtes mit einer Einrichtung zur Beschickung des Füllschachtes mit Fasermaterial, einer Einrichtung zum Abzug des Fasermaterials aus dem Füllschacht, einer Einrichtung zur Einführung von Luft in den Oberteil des Füllschachtes zwecks Verdichtung des Fasergutes sowie mit in der Wandfläche des Füllschachtes angeordneten Luftaustrittsöffnungen. An die Luftaustrittsöffnungen ist mit seinem einen Ende ein Abströmkanal angeschlossen, der mit seinem anderen Ende an die das Fasergut mit Luft beaufschlagende Einrichtung angeschlossen ist.

Eine vergleichbare Vorrichtung ist aus der JP H02 106472 U bekannt.

Aus der US 3,486,309 A ist eine Vorrichtung zur Abscheidung von aus Spinnereimaschinen, insbesondere Karden, abgesaugtem Faserflug und dergleichen Verunreinigungen bekannt. Die Vorrichtung umfasst einen Saugförderkanal für faserflugbeladene Luft, der wenigstens im Bereich jeder Textilmaschine eine Ansaugöffnung für das Absaugen des anfallenden Faserflugs aufweist und in ein Sammelgefäß mit einer Filterfläche mündet, an das wenigstens eine auf Blasen umschaltbare Saugeinrichtung hinter der Filterfläche angeschlossen ist und aus dessen Unterteil der an der Filterfläche abgeschiedene Faserflug periodisch oder kontinuierlich abziehbar ist. Das Sammelgefäß ist mit Abstand von den Spinnereimaschinen angeordnet und die Filterfläche ist mit der Anströmseite gegenüber der Horizontalen nach unten derart im Sammelgefäß geneigt, dass ein Teil des abgeschiedenen Faserflugs nur auf Grund des Schwerkrafteinflusses in den Unterteil des Sammelbehälters abfällt.

Aus der FR 1.498.901 A ist eine Speichervorrichtung für Fasermaterial bekannt, die einen Speicherschacht zum Speichern des Fasermaterials aufweist. Zwischen einem Schachtgehäuse des Speicherschachts und einem Reinigungsgehäuse einer Reinigungseinheit weist die Speichervorrichtung eine teildurchlässige Trennwand auf. Diese hält das Fasermaterial im Speicherraum zurück und lässt die verunreinigte Förderluft in den Reinigungsraum einströmen. Nachteilig hierbei ist, dass das gesamte Förderluftvolumen abgesaugt werden muss. Aufgrund dessen wird für die Reinigung der Förderluft viel Energie benötigt, wodurch die Luftreinigung bzw. der Betrieb dieser Anlage sehr teuer ist.

Aufgabe der vorliegenden Erfindung ist es somit, eine Speichervorrichtung sowie eine Vorrichtung mit einer derartigen Speichervorrichtung zu schaffen, mit der die Reinigung der Förderluft energiesparsam und somit kostengünstig erfolgen kann.

Die Aufgabe wird gelöst durch eine Speichervorrichtung sowie eine Vorrichtung mit einer derartigen Speichervorrichtung mit den Merkmalen des unabhängigen Patentanspruchs.

Vorgeschlagen wird eine Speichervorrichtung für eine Vorrichtung zum Vorbereiten und/oder Speisen von Fasermaterial, insbesondere zur Vliesherstellung. Die Speichervorrichtung umfasst einen Speicherschacht zum Zwischenspeichern von Fasermaterial, der ein Schachtgehäuse mit einem Speicherraum und eine in den Speicherraum führende Zuleitung aufweist, über die das Fasermaterial pneumatisch mit einer Förderluft in den Speicherraum förderbar ist. Des Weiteren umfasst die Speichervorrichtung eine Reinigungseinheit zum Reinigen der im Speicherraum befindlichen verunreinigten Förderluft. Die Reinigungseinheit umfasst ein Reinigungsgehäuse mit einem Reinigungsraum. Außerdem weist die Speichervorrichtung eine teildurchlässige Trennwand auf. Diese ist im Förderluftstrom der Förderluft zwischen dem Speicherraum und dem Reinigungsraum angeordnet. Die teildurchlässige Trennwand ist derart ausgebildet, dass diese das Fasermaterial im Speicherraum zurückhält und die verunreinigte Förderluft in den Reinigungsraum einströmen lässt. Hierdurch kann über die Trennwand eine Trennung der Fasern von der verunreinigten Förderluft erfolgen. Unter dem Begriff "Verunreinigungen" ist insbesondere Staub, Mikrostaub sowie größere Fremdpartikel zu verstehen. Die Verunreinigungen können ferner feinste Fasern oder Faserpartikel des Fasermaterials umfassen.

Ferner weist die Reinigungseinheit ein im Förderluftstrom zwischen dem Reinigungsraum und der Umgebung angeordnetes Filterelement auf. Über das Filterelement können somit Verunreinigungen der Förderluft im Reinigungsraum zurückgehalten werden. Die gefilterte Förderluft kann hingegen durch das Filterelement in die Umgebung austreten. Vorteilhafterweise wird somit die Strömungsenergie der Förderluft dazu verwendet, um diese durch das Filterelement hindurchtreten zu lassen. Hierdurch kann eine Absauganlage zum Absaugen der Förderluft durch das Filterelement hindurch eingespart werden. Ein Großteil der Förderluft kann somit ohne zusätzlichen Energiebedarf durch das Filterelement hindurchgeführt werden. Die Reinigungseinheit kann somit sehr energieeffizient und somit kostengünstig betrieben werden.

Um die Betriebsbereitschaft der Reinigungseinheit möglichst lange sicherstellen zu können bzw. um den Wartungsaufwand der Reinigungseinheit möglichst gering zu halten, weist das Reinigungsgehäuse einen bodenseitigen Sammelraum auf. Der Sammelraum ist unterhalb des Reinigungsraums angeordnet. Vorteilhafterweise setzen sich die vom Filterelement im Reinigungsraum zurückgehaltenen Verunreinigungen somit selbstständig durch die Schwerkraft bedingt im Sammelraum ab. Hierdurch kann sichergestellt werden, dass ein Großteil der Verunreinigungen selbstständig vom Filterelement abfallen und somit aus dem Förderluftstrom transportiert werden. Hierdurch kann der Förderluftstrom ungehindert über längere Zeit durch das Filterelement hindurchtreten. Die vorstehende Speichervorrichtung kann somit sehr kostengünstig mit geringem Wartungsaufwand betrieben werden.

Der Sammelraum weist eine aus dem Reinigungsgehäuse austretende Entsorgungsöffnung auf. Über diese Entsorgungsöffnung können somit die sich im Sammelraum absetzenden Verunreinigungen aus dem Sammelraum abgeführt werden. Vorzugsweise werden die Verunreinigungen über die Entsorgungsöffnung aus dem Sammelraum in einen Abfallbehälter abgeführt. In einer vorteilhaften Weiterbildung der Erfindung ist die Entsorgungsöffnung vorzugsweise seitlich am Sammelraum ausgebildet.

Die Entsorgung der Verunreinigungen aus dem Sammelraum kann sehr platzsparend erfolgen, wenn die Entsorgungsöffnung an einer ersten Sammelraumwand des Sammelraums angeordnet ist.

Die Reinigungseinheit weist eine, insbesondere mechanische oder pneumatische, Transporteinrichtung auf, mit der die Verunreinigungen über die Entsorgungsöffnung aus dem Sammelraum abführbar sind.

Vorzugsweise ist die pneumatische Transporteinrichtung derart ausgebildet, dass diese einen Entsorgungsluftstrom durch die Entsorgungsöffnung saugt oder bläst. Die pneumatische Transporteinrichtung ist vorzugsweise derart ausgebildet, dass diese einen in Richtung der Entsorgungsöffnung strömenden Entsorgungsluftstrom erzeugt, mit dem die sich im Sammelraum absetzenden Verunreinigungen aus der Entsorgungsöffnung ausgelassen und/oder abgesaugt werden können. Vorteilhafterweise kann die pneumatische Transporteinrichtung somit sehr kosteneffizient betrieben werden, da sie nur einen geringen Teil der Förderluft des Förderluftstroms durch die Entsorgungsöffnung abführen muss. Der Großteil der Förderluft wird hingegen, wie bereits vorstehend erläutert, über das Filterelement passiv ausgelassen, wobei hierfür der Förderluftstrom einer Transportvorrichtung genutzt wird, die das Fasermaterial über die Zuleitung in das Schachtgehäuse bläst.

Vorteilhaft ist es, wenn die pneumatische Transporteinrichtung zumindest eine Blasöffnung aufweist, über die der Entsorgungsluftstrom in den Sammelraum einführbar ist. Über die Blasöffnung kann vorteilhafterweise die Richtung des Entsorgungsluftstroms beeinflusst werden. Die Blasöffnung kann eine gewöhnliche Öffnung in einem Boden und/oder einer Wandung sein. Alternativ ist es aber auch ebenso denkbar, dass die Blasöffnung als Düse ausgebildet ist.

Vorteilhaft ist es, wenn die zumindest eine Blasöffnung in Bezug zur Entsorgungsöffnung derart ausgerichtet ist, dass ein in Richtung der Entsorgungsöffnung orientierter und/oder gerichteter Entsorgungsluftstrom erzeugbar ist. Hierdurch kann der Abtransport der Verunreinigungen aus der Entsorgungsöffnung sehr energieeffizient gestaltet werden.

In einer vorteilhaften Weiterbildung ist die zumindest eine Blasöffnung an einer, insbesondere der ersten Sammelraumwand gegenüberliegenden, zweiten Sammelraumwand angeordnet. Hierdurch ist sichergestellt, dass der Entsorgungsluftstrom aus der Blasöffnung Austritt und in Richtung der Entsorgungsöffnung geblasen wird.

Zusätzlich oder alternativ ist es vorteilhaft, wenn zumindest eine Blasöffnung an einem Sammelraumboden des Sammelraums angeordnet ist. Hierdurch kann vermieden werden, dass Verunreinigungen vom Entsorgungsluftstrom nicht erfasst werden und sich am Sammelraumboden festsetzen.

In einer vorteilhaften Weiterbildung der Erfindung ist der Sammelraumboden zumindest in einem ersten Abschnitt geneigt. Zusätzlich oder alternativ kann der Sammelraumboden in dem ersten Abschnitt zur Entsorgungsöffnung hin schräg verlaufen.

Auch ist es vorteilhaft, wenn der Sammelraumboden zusätzlich oder alternativ in einem zweiten Abschnitt waagrecht verläuft. So kann der Sammelraumboden beispielsweise derart ausgebildet sein, dass dieser ausgehend von der Entsorgungsöffnung zunächst waagrecht verläuft und anschließend schräg ansteigt.

Vorteilhaft ist es, wenn die pneumatische Transporteinrichtung eine Vielzahl von Blasöffnungen aufweist. Hierbei ist zumindest eine Blasöffnung vorzugsweise an einer Sammelraumwand und/oder zumindest eine Blasöffnung am Sammelraumboden angeordnet.

Die Blasöffnungen können sehr kostengünstig ausgebildet werden, wenn der Sammelraumboden zumindest in einem Abschnitt aus einem Lochblech mit einer Vielzahl von Blasöffnungen ausgebildet ist.

Zusätzlich oder alternativ ist es vorteilhaft, wenn der Sammelraumboden zumindest eine Stufe aufweist. Die Stufe zeigt vorzugsweise in Richtung der Entsorgungsöffnung. Dies bedeutet, dass zumindest eine Stirnseite der Stufe in Richtung der Entsorgungsöffnung orientiert ist. Der gestufte Sammelraumboden fällt somit stufenweise in Richtung der Entsorgungsöffnung hin ab. Zusätzlich oder alternativ ist es vorteilhaft, wenn in der Stufe zumindest eine Blasöffnung ausgebildet ist. Die Blasöffnung ist somit vorzugsweise in der Stirnseite der Stufe ausgebildet, die in Richtung der Entsorgungsöffnung zeigt.

Diesbezüglich ist es ferner vorteilhaft, wenn der Sammelraumboden in Richtung der Entsorgungsöffnung durch mehrere hintereinander angeordnete Stufen abgestuft ist. Hierdurch kann sichergestellt werden, dass in Längsrichtung des Sammelraumbodens an unterschiedlichen Stellen Blasöffnungen ausgebildet sind. Vorzugsweise sind diese Blasöffnungen in den jeweiligen Abstufungen ausgebildet.

Vorteilhaft ist es, wenn die pneumatische Transporteinrichtung einen Ventilator zum Erzeugen des Entsorgungsluftstroms aufweist. Der Ventilator ist vorzugsweise als Gebläse ausgebildet. Er saugt somit von der Umgebung Luft an und bläst diese als Entsorgungsluftstrom in das Reinigungsgehäuse ein. Der Blasventilator steht vorzugsweise mit der zumindest einen Blasöffnung in Wirkverbindung. Dies erfolgt insbesondere über einen an der Rückseite der zweiten Sammelraumwand und/oder an der Rückseite des Sammelraumbodens ausgebildeten Luftzuführraum. Infolgedessen saugt der Ventilator aus der Umgebung Luft an und lässt diese in den Luftzuführraum ein. Über den Luftzuführraum wird die Luft an die Blasöffnung verteilt, aus der die Luft als Entsorgungsluftstrom aus der zumindest einen Blasöffnung austritt. Der aus der zumindest einen Blasöffnung austretende Entsorgungsluftstrom nimmt die Verunreinigungen mit und fördert diese durch die Entsorgungsöffnung aus dem Sammelraum heraus.

Vorteilhaft ist es, wenn der Ventilator und die Entsorgungsöffnung an zwei gegenüberliegenden Seiten des Reinigungsgehäuses angeordnet sind.

Auch ist es vorteilhaft, wenn sich der Sammelraum zumindest in einem Abschnitt in Richtung des Sammelraumbodens trichterförmig verjüngt. Hierdurch können die sich durch die Schwerkraft absetzenden Verunreinigungen zum Sammelraumboden geführt werden.

In einer alternativen Ausführungsform kann die Transporteinrichtung auch als mechanische Transporteinrichtung ausgebildet sein, wobei diese dann vorzugsweise ein motorisch betriebenes Förderband umfasst, das vorzugsweise zumindest einen Teil des Sammelraumbodens bildet. Das Förderband ist gegenüber der Entsorgungsöffnung derart angeordnet, dass über das Förderband die Verunreinigungen aus der Entsorgungsöffnung transportiert werden können.

In einer vorteilhaften Weiterbildung der Erfindung ist die Trennwand ein Lochblech. Auch ist es vorteilhaft, wenn die Trennwand zumindest einen Teil einer gemeinsamen Seitenwand des Schachtgehäuses und des Reinigungsgehäuses ausbildet. Das Schachtgehäuse und das Reinigungsgehäuse sind somit unmittelbar zueinander benachbart angeordnet, so dass diese sich eine Seitenwand teilen. Durch diese gemeinsame Seitenwand ist vorzugsweise die Trennwand ausgebildet.

Vorteilhaft ist es, wenn das Schachtgehäuse einen unteren Speicherraum aufweist, in dem sich die durch die Zuleitung hinein geförderten Fasern absetzen können und dort gespeichert werden. Zusätzlich ist es vorteilhaft, wenn das Schachtgehäuse einen Zuführraum aufweist, der über dem Speicherraum angeordnet ist. In dem Zuführraum ist das Fasermaterial noch mit der Förderluft vermischt, so dass das Fasermaterial durchgewirbelt wird. Die Trennwand ist vorzugsweise im Bereich des Zuführraums angeordnet.

Vorteilhaft ist es, wenn das Filterelement an einer insbesondere der Trennwand gegenüberliegenden Außenwand des Reinigungsgehäuses, insbesondere des Reinigungsraums, angeordnet ist und/oder diese zumindest teilweise ausbildet. Hierdurch kann die Förderluft umgehend in die Umgebung entlassen werden, sobald diese durch das Filterelement, das vorliegend zumindest ein Teil der Außenwand des Reinigungsgehäuses bildet, hindurchgetreten ist. Das Filterelement ist somit vorteilhafterweise als Filterwand und/oder Filteraußenwand ausgebildet, die vorzugsweise zumindest einen Teil der Gehäusewandung des Reinigungsgehäuses ausbildet.

Ein weiterer Vorteil besteht darin, dass das Filterelement somit leicht gereinigt werden kann. So kann es vorkommen, dass sich ein Teil der Verunreinigungen an der Innenseite des Filterelements festsetzen. Das zumindest einen Teil der Außenwand bildende Filterelement kann somit von außen nach innen mit einem Reinigungsluftstrahl durchblasen werden, so dass dessen Innenseite wieder freigesetzt wird. Die freigesetzten Verunreinigungen können sich somit bedingt durch die Schwerkraft im Sammelraum absetzen.

Vorteilhaft ist es, wenn das Material des Filterelements ein Metall, ein Kunststoff und/oder ein Textil, insbesondere aus natürlichen oder künstlichen Fasern, ist. Vorzugsweise ist das Filterelement aus Papier, einem Metallgewebe, Metallgitter und/oder einer, insbesondere metallischen, Platte mit Mikrobohrungen, ausgebildet. Unter dem Begriff "Mikrobohrungen" sind Bohrungen zu verstehen, die Staubpartikel in der Luft zurückhalten können und/oder die im Vergleich zu den Bohrungen der als Lochblech ausgebildeten Trennwand, insbesondere um ein Vielfaches, kleiner sind.

In einer vorteilhaften Weiterbildung der Erfindung weist die Speichervorrichtung zwei, insbesondere zueinander symmetrisch und/oder gegenüberliegend angeordnete, Reinigungseinheiten auf. Die beiden Reinigungseinheiten sind vorzugsweise gemäß der vorangegangenen Beschreibung ausgebildet, wobei die genannten Merkmale einzeln oder in beliebiger Kombination vorhanden sein können. Vorzugsweise sind die jeweiligen Reinigungsräume der beiden Reinigungseinheiten vom gemeinsamen Speicherraum über eine separate Trennwand getrennt.

Vorgeschlagen wird ferner eine Vorrichtung zum Vorbereiten und/oder Speisen von Fasermaterial für eine Textilanlage, insbesondere zur Vliesherstellung, die eine Speichervorrichtung zum Zwischenspeichern des Fasermaterials aufweist. Die Speichervorrichtung ist gemäß der vorangegangenen Beschreibung ausgebildet, wobei die genannten Merkmale einzeln oder in beliebiger Kombination vorhanden sein können. Hierdurch kann die Reinigung der Förderluft sehr energiesparsam erfolgen.

Vorteilhaft ist es, wenn die Vorrichtung ein Öffner zum Öffnen des Fasermaterials ist. Hierbei ist die Vorrichtung insbesondere ein Mischöffner und/oder ein Feinöffner. Zusätzlich oder alternativ ist es vorteilhaft, wenn die Vorrichtung ein Speiser ist, mit dem das Fasermaterial einer der Vorrichtung nachgeschalteten Maschine, insbesondere einer Krempel und/oder Karde, zugeführt werden kann.

Diesbezüglich ist es vorteilhaft, wenn die Vorrichtung eine der Speichervorrichtung in Materialflussrichtung nachgelagerte Speisewalze, Abzugswalze und/oder Öffnerwalze umfasst.

Weitere Vorteile der Erfindung sind in den nachfolgenden Ausführungsbeispielen beschrieben. Es zeigt:
- **Figur 1**: eine schematische Darstellung einer Textilanlage zur Vliesherstellung in einer perspektivischen Ansicht,
- **Figur 2a**: eine Vorrichtung zum Vorbereiten und/oder Speisen von Fasermaterial in einer seitlichen Schnittansicht mit einer eine Reinigungseinheit aufweisenden Speichervorrichtung,
- **Figur 2b**: eine Vorrichtung zum Vorbereiten und/oder Speisen von Fasermaterial in einer seitlichen Schnittansicht mit zwei Zuleitungen für Fasermaterial,
- **Figur 3**: die Vorrichtung gemäß dem in Figur 2a oder 2b dargestellten Ausführungsbeispiel in einer Vorderansicht,
- **Figur 4**: eine Detailansicht der Reinigungseinheit der in Figur 2a, 2b und 3 dargestellten Vorrichtung im Bereich einer pneumatischen Transporteinrichtung gemäß einem ersten Ausführungsbeispiel und
- **Figur 5**: eine Detailansicht der Reinigungseinheit der in Figur 2a, 2b und 3 dargestellten Vorrichtung im Bereich einer pneumatischen Transporteinrichtung gemäß einem zweiten Ausführungsbeispiel.

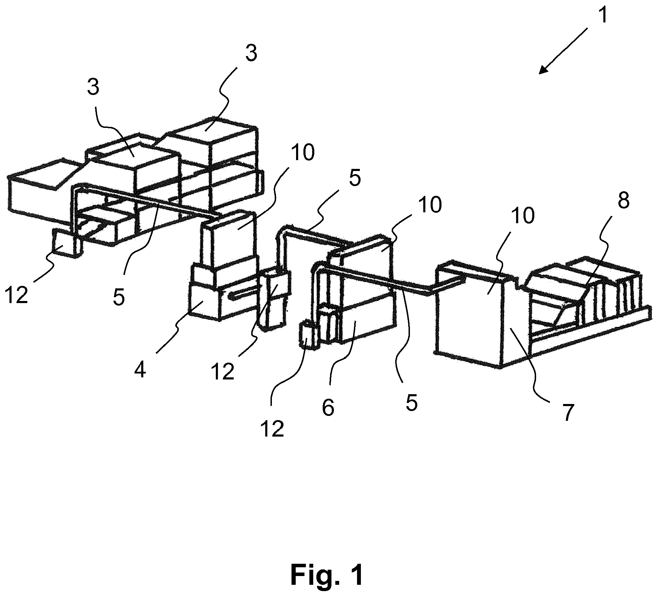

Figur 1 zeigt ein Ausführungsbeispiel einer Textilanlage 1, die vorliegend zur Vliesherstellung ausgebildet ist. Das als Ballen vorgelegte Fasermaterial 2 wird über Ballenöffner 3 geöffnet und auf ein Transportband abgeworfen. Anschließend wird das geöffnete Fasermaterial 2 über eine Rohrleitung 5 einem Mischöffner 4 zugeführt, durch den das Fasermaterial eine erste Auflösung und weitere Durchmischung erfährt. Vom Mischöffner 4 gelangt das Fasermaterial 2 über eine weitere Rohrleitung 5 in einen Feinöffner 6, in welchem es eine Feinauflösung erfährt. Über eine dritte Rohrleitung 5 gelangt das Fasermaterial schließlich zu einem Füllschachtspeiser 7, von welchem eine Krempel 8 gespeist wird. Die Förderung des Fasermaterials 2 durch die Rohrleitungen 5 erfolgt mit zumindest einer pneumatischen Fördervorrichtung 12, die über ein Gebläse einen Förderluftstrom 29 erzeugt.

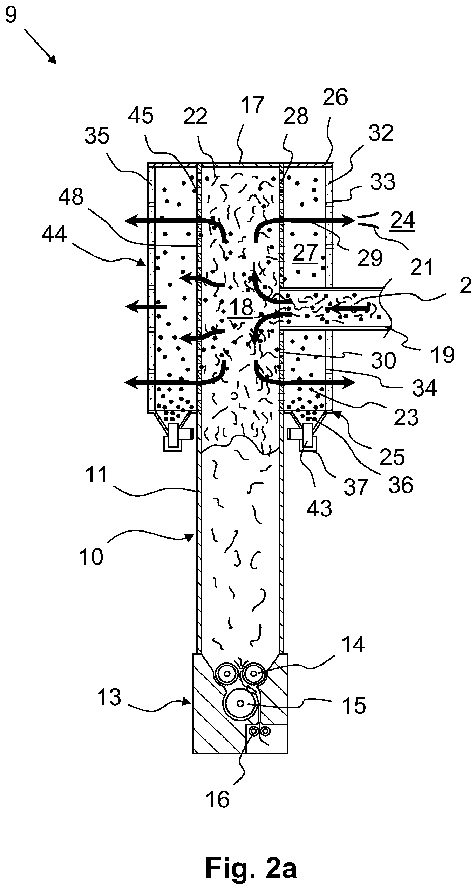

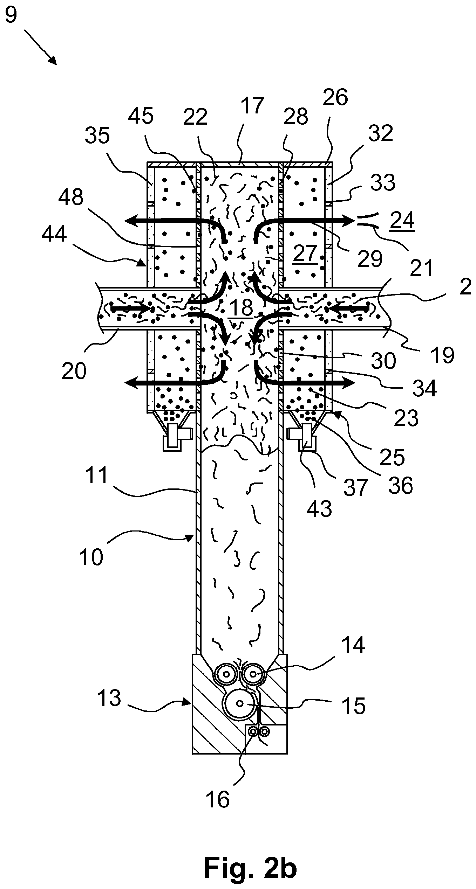

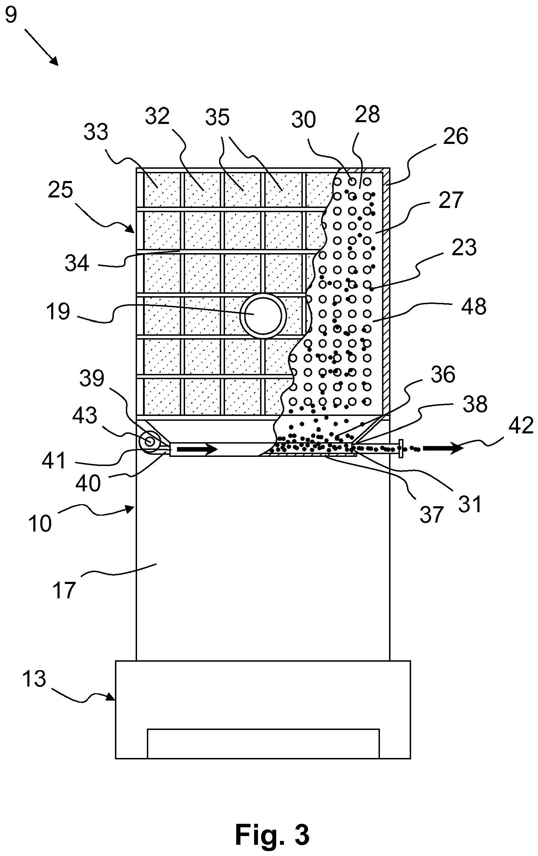

Der Mischöffner 4, der Feinöffner 6 sowie der Füllschachtspeiser 7 sind Ausführungsbeispiele einer nachfolgend im Detail beschriebenen Vorrichtung 9 zum Vorbereiten und/oder Speisen des Fasermaterials 2. Eine Detailansicht dieser Vorrichtung 9 ist in den Figuren 2 und 3 dargestellt.

Gemäß Figur 1 weisen der Mischöffner 4, der Feinöffner 6 sowie der Füllschachtspeiser 7 jeweils eine Speichervorrichtung 10 mit einem, insbesondere in der Seitenansicht schmalen und hohen, Speicherschacht 11 auf. Die für ein genügend großes Reservevolumen notwendige große Bauhöhe der Speicherschächte 11 wirkt sich platzsparend in der Grundfläche aus. Die Speicherschächte 11 dieser Vorrichtungen 4, 6, 7 dienen als Puffer, um Schwankungen in der Zulieferung durch die Ballenöffner 3, die nachgeschalteten Öffner, insbesondere durch den Mischöffner 4 und/oder den Feinöffner 6, und/oder den Füllschachtspeiser 7 auszugleichen.

In den Figuren 2a, 2b und 3 ist eine Detailansicht einer Vorrichtung 9 dargestellt, mit der das Fasermaterial 2 in einer Textilanlage 1 zwischengespeichert, vorbereitet und/oder gespeist werden kann. Diese Vorrichtung 9 kann, wie bereits vorstehend erläutert, in einer Textilanlage 1 zum Einsatz kommen, wie sie exemplarisch in Figur 1 dargestellt ist. In diesem Fall ist die Vorrichtung 9 eine Textilvorbereitungsvorrichtung zur Vliesherstellung.

Gemäß Figur 2a, 2b und 3 umfasst die Vorrichtung 9 eine Speichervorrichtung 10. In dieser Speichervorrichtung 10 kann das Fasermaterial 2 zwischengespeichert werden, um Schwankungen in der Zulieferung einzelner Maschinen abfangen bzw. puffern zu können.

Neben der Speichervorrichtung 10 umfasst die Vorrichtung 9 des Weiteren eine Bearbeitungseinheit 13. Die Bearbeitungseinheit 13 ist unterhalb der Speichervorrichtung 10 angeordnet. Mit der Bearbeitungseinheit 13 kann das in der Speichervorrichtung 10 gespeicherte Fasermaterial 2 vorbereitet, insbesondere geöffnet werden, und/oder in eine nachfolgende Maschine, insbesondere in eine Krempel und/oder Karde, gespeist werden. Vorliegend umfasst die Bearbeitungseinheit 13 Speisewalzen 14, mit denen das im Speicherschacht 11 befindliche Fasermaterial 2 einer weiteren Vorrichtung zugeführt werden kann. Außerdem weist die Bearbeitungseinheit 13 zumindest eine Öffnerwalze 15 auf. Diese ist den Speisewalzen 14 nachgelagert. Ferner umfasst die Bearbeitungseinheit 13 Abzugswalzen 16, mit denen das Fasermaterial 2 aus der Vorrichtung 9 abgezogen und einer weiteren Vorrichtung, insbesondere einer Krempel und/oder Karde, bereitgestellt werden kann.

Wie bereits vorstehend erwähnt, umfasst die in Figur 2a, 2b und 3 dargestellte Speichervorrichtung 10 einen Speicherschacht 11. Der Speicherschacht 11 weist ein Schachtgehäuse 17 auf. In dem Schachtgehäuse 17 ist ein Speicherraum 18 ausgebildet, in dem das in die Speichervorrichtung 10 pneumatisch geförderte Fasermaterial 2 zwischengespeichert werden kann. Vorliegend wird das Fasermaterial 2 in einem oberen Bereich des Speicherraums 18 eingeführt. In diesem wirbelt das Fasermaterial 2 zusammen mit der Förderluft 21 umher. In einem unteren Bereich des Speicherraums 18 setzen sich die zu speichernden Fasern 22 ab.

Um das Fasermaterial 2 in den Speicherraum 18 fördern zu können, umfasst der Speicherschacht 11 zumindest eine in den Speicherraum 18 führende Zuleitung 19. Die zumindest eine Zuleitung 19 steht mit einer pneumatischen Fördervorrichtung 12, wie diese beispielsweise in Figur 1 dargestellt ist, in Wirkverbindung. Das Fasermaterial 2 kann somit pneumatisch mit einem entsprechenden Förderdruck über die zumindest eine Zuleitung 19 in den Speicherraum 18 gefördert werden. Figur 2a zeigt ein Ausführungsbeispiel mit einer einzigen derartigen Zuleitung 19. Figur 2b zeigt ein Ausführungsbeispiel mit zwei Zuleitungen 19, 20. Die beiden Zuleitungen 19, 20 sind an gegenüberliegenden Seiten des Speicherraums 18 angeordnet. Abgesehen von der Anzahl der Zuleitungen 19, 20 sind die in Figur 2a und 2b dargestellten Ausführungsbeispiele im Wesentlichen baugleich. Die in Figur 3 dargestellte Vorderansicht bezieht sich somit auf beide dieser Ausführungsbeispiele.

Über die zumindest eine Zuleitung 19, 20 wird das Fasermaterial 2 mit einer Förderluft 21 in den Speicherraum 18 gefördert. Hierdurch verschmutzt die Förderluft 21. So weist das Fasermaterial 2 nicht nur Fasern 22, sondern auch Verunreinigungen 23 auf. Bevor die Förderluft 21 in die Umgebung 24 abgelassen werden kann, müssen diese Verunreinigungen 23 herausgefiltert werden. Hierfür umfasst die Speichervorrichtung 10 eine Reinigungseinheit 25.

Die Reinigungseinheit 25 weist ein Reinigungsgehäuse 26 auf. In dem Reinigungsgehäuse 26 ist ein Reinigungsraum 27 ausgebildet. Der Speicherraum 18 des Speicherschachts 11, insbesondere dessen oberer Bereich, und der Reinigungsraum 27 der Reinigungseinheit 25 sind durch eine Trennwand 28 voneinander getrennt. In Bezug auf einen vorliegend durch Pfeile angedeuteten Förderluftstrom 29 befindet sich die Trennwand somit zwischen dem Speicherraum 18 und dem Reinigungsraum 27. Im unteren Bereich des Speicherschachts 11 ist die Wandung des Speicherraums 18 undurchlässig ausgebildet.

Die Trennwand 28 ist derart ausgebildet, dass diese das Fasermaterial 2 bzw. die darin beinhalteten Fasern 22 im Speicherraum 18 zurückhält und die Förderluft 21 zusammen mit ihren darin beinhalteten Verunreinigungen 23 in den Reinigungsraum 27 einströmen lässt. Die Trennwand 28 ist somit teildurchlässig ausgebildet. Vorzugsweise ist die Trennwand 28 hierfür als Lochblech ausgebildet. Die Trennwand weist eine Vielzahl von Trennwandlöchern 30 auf, von denen zur Wahrung der Übersichtlichkeit nur eines mit einem Bezugszeichen versehen ist. Die Größe dieser Trennwandlöcher 30 ist derart ausgebildet, dass die Fasern 22 zurückgehalten werden, die Verunreinigungen 23 zusammen mit der Förderluft 21 jedoch passieren können.

Wie aus Figur 2a, 2b hervorgeht, ist das Schachtgehäuse 17 und das Reinigungsgehäuse 26 unmittelbar zueinander benachbart angeordnet. Infolgedessen weisen diese eine gemeinsame Seitenwand 48 auf. Zumindest ein Teil dieser gemeinsamen Seitenwand 48 bildet die halbdurchlässige Trennwand 28. Vorliegend ist die gesamte gemeinsame Seitenwand 48 als Trennwand 28 ausgebildet.

Gemäß der vorangegangenen Beschreibung dient die Trennwand 28 somit dazu, die Fasern 22 von der verunreinigten Förderluft 21 zu trennen. Die Fasern 22 bleiben somit im Speicherraum 18 zurück und sammeln sich aufgrund der Schwerkraft im unteren Bereich des Speicherschachts 11 an.

Gemäß dem in Figur 2a, 2b angedeuteten Förderluftstrom 29 tritt die Förderluft 21 somit zusammen mit ihren Verunreinigungen 23 durch die Trennwand 28 hindurch in den Reinigungsraum 27 ein. Um die Verunreinigungen 23 von der Förderluft 21 zu trennen, umfasst die Reinigungseinheit 25 ein Filterelement 32. Dieses Filterelement 32 ist im Förderluftstrom 29 zwischen dem Reinigungsraum 27 und der Umgebung 24 angeordnet. Auch das Filterelement 32 ist halbdurchlässig ausgebildet, nämlich in der Art und Weise, dass zumindest ein Teil der im Förderluftstrom 29 beinhalteten Verunreinigungen 23 im Reinigungsraum 27 zurückgehalten werden und die nunmehr durch das Filterelement 32 gefilterte Förderluft 21 in die Umgebung 24 austreten kann.

Das Filterelement 32 ist vorzugsweise ein Trockenfilter und/oder Luftfilter. Dieser kann beispielsweise Fasern und/oder Körner aufweisen. Ferner kann dieser ein papierähnliches und/oder stoffähnliches Gewebe aufweisen. Die Trennwand 28 erfüllt somit eine grobe Siebfunktion und das Filterelement 32 eine feine Filterfunktion. Vorteilhaft ist es, wenn das Material des Filterelements 32 ein Metall, ein Kunststoff und/oder ein Textil, insbesondere aus natürlichen oder künstlichen Fasern, ist. Vorzugsweise ist das Filterelement 32 aus Papier, einem Metallgewebe, Metallgitter und/oder einer, insbesondere metallischen, Platte mit Mikrobohrungen, ausgebildet. Unter dem Begriff "Mikrobohrungen" sind Bohrungen zu verstehen, die Staubpartikel in der Luft zurückhalten können und/oder die im Vergleich zu den Bohrungen der als Lochblech ausgebildeten Trennwand 28, insbesondere um ein Vielfaches, kleiner sind.

Wie aus Figur 2a, 2b und 3 hervorgeht, ist das Filterelement 32 an einer Außenwand 33 des Reinigungsraums 27 und/oder des Reinigungsgehäuses 26 angeordnet. Gemäß dem vorliegenden Ausführungsbeispiel ist das Filterelement 32 an der der Trennwand 28 gegenüberliegenden Außenwand 33 des Reinigungsgehäuses 26 angeordnet. Das Filterelement 32 bildet die Außenwand 33 zumindest teilweise aus. Das Filterelement 32 ist somit als Filterwand und/oder Filteraußenwand ausgebildet, die vorzugsweise zumindest einen Teil der Gehäusewandung des Reinigungsgehäuses 26 ausbildet. Hierdurch kann das Filterelement 32 leicht gereinigt werden, indem dieses von außen mit einem Reinigungsluftstrom durchblasen wird. Im Inneren und/oder an der Innenseite des Filterelements 32 festgesetzte Verunreinigungen 23 können somit zurück in den Reinigungsraum 27 geblasen werden, so dass das Filterelement 32 frei wird und sich die Verunreinigungen 23 schwerkraftsbedingt im unteren Bereich des Reinigungsgehäuses 26 absetzten können.

Um das Filterelement 32 gegenüber dem Förderluftstrom 29 und/oder dem entgegengerichteten Reinigungsluftstrom abzustützen, umfasst das Reinigungsgehäuse 26 ein Traggitter 34 (vgl. insbesondere Figur 3). Dieses ist schachbrettartig ausgebildet. Das Filterelement 32 kann sich über das gesamte Traggitter 34 erstrecken. In diesem Fall ist das Filterelement 32 vorzugsweise auf das Traggitter 34 aufgespannt. Alternativ kann das Filterelement 32 aber auch mehrteilig ausgebildet sein, insbesondere aus einer Vielzahl von Filterplatten 35. Aus Gründen der Übersichtlichkeit sind nur einige dieser Filterplatten 35 mit Bezugszeichen versehen.

Gemäß Figur 2a, 2b und 3 umfasst das Reinigungsgehäuse 26 neben dem Reinigungsraum 27, in dessen Bereich die Verunreinigungen 23 mit dem Filterelement 32 herausgefiltert werden, einen Sammelraum 36. Dieser Sammelraum 36 dient dazu, die über das Filterelement 32 herausgefilterten Verunreinigungen 23 zu sammeln, damit diese anschließend entsorgt werden können. Hierfür ist der Sammelraum 36 bodensseitig im Reinigungsgehäuse 26 angeordnet. Infolgedessen befindet sich der Sammelraum 36, wie in Figur 2a, 2b und 3 dargestellt, abbildungsgemäßen unterhalb des Reinigungsraums 27. Aufgrund dessen setzen sich die vom Filterelement 32 im Reinigungsraum 27 zurückgehaltenen Verunreinigungen 23 durch die Schwerkraft im Sammelraum 36 ab.

In einem vorliegend nicht dargestellten Ausführungsbeispiel könnte im Förderluftstrom 29 zwischen der Trennwand 28 und dem Filterelement 32 zumindest ein zusätzlicher Zwischenfilter angeordnet sein. Der Zwischenfilter ist vorzugsweise im Inneren des Reinigungsgehäuses 26 derart angeordnet, dass ein erster Teil der Verunreinigungen 23 durch den Zwischenfilter und ein durch diesen hindurchtretender zweiter Teil der Verunreinigungen 23 durch das Filterelement 32 zurückgehalten wird. Des Weiteren ist der Zwischenfilter vorzugsweise derart ausgebildet und/oder angeordnet, dass sich sowohl der erste Teil als auch der zweite Teil der Verunreinigungen 23 durch die Schwerkraft in denselben Sammelraum 36 absetzten.

Bodenseitig ist der Sammelraum 36 von einem Sammelraumboden 37 begrenzt. Des Weiteren weist der Sammelraum 36 mehrere Sammelraum Wände 38, 39 auf. Um die Verunreinigungen 23 mittels der Schwerkraft bis zum Sammelraumboden 37 zu führen, ist es vorteilhaft, wenn sich der Sammelraum 36 gemäß Figur 2a, 2b und 3 zumindest in einem Abschnitt in Richtung des Sammelraumbodens 37 trichterförmig verjüngt.

Wie insbesondere aus Figur 3 hervorgeht weist die Reinigungseinheit 25 eine Entsorgungsöffnung 31 auf. Die Entsorgungsöffnung 31 ist im Bereich des Sammelraums 36 ausgebildet. Über die im Reinigungsgehäuse 26 ausgebildete Entsorgungsöffnung 31 können die sich durch die Schwerkraft abgesetzten Verunreinigungen 23 aus dem Sammelraum 36 abgeführt werden. Vorzugsweise werden die Verunreinigungen 23 über die Entsorgungsöffnung 31 unmittelbar oder mittelbar über ein Rohrsystem in einen vorliegend nicht dargestellten Abfallbehälter gefördert.

Um die Verunreinigungen 23 über die Entsorgungsöffnung 31 aus dem Sammelraum 36 abzuführen, umfasst die Reinigungseinheit 25 eine Transporteinrichtung 40. Gemäß dem vorliegenden Ausführungsbeispiel ist die Transporteinrichtung 40 als pneumatische Transporteinrichtung ausgebildet. Hierfür umfasst die pneumatische Transporteinrichtung 40 zumindest eine Blasöffnung 41. Über diese Blasöffnung 41 kann ein Entsorgungsluftstrom 42 in den Sammelraum 36 eingeblasen werden. Die zumindest eine Blasöffnung 41 ist vorzugsweise derart angeordnet und/oder ausgebildet, dass der Entsorgungsluftstrom 42 in Richtung der Entsorgungsöffnung 31 orientiert und/oder gerichtet ist.

Zum Erzeugen des Entsorgungsluftstroms 42 umfasst die pneumatische Transporteinrichtung 40 einen Ventilator 43. Mit dem Ventilator 43 kann somit der Entsorgungsluftstrom 42 erzeugt werden, der über die zumindest eine Blasöffnung 41 derart in den Sammelraum 36 geleitet wird, dass die sich aufgrund der Schwerkraft am Sammelraumboden 37 abgesetzten Verunreinigungen 23 über die Entsorgungsöffnung 31 aus dem Sammelraum 36 ausgelassen werden können. Der Ventilator 43 ist somit insbesondere als Gebläse ausgebildet.

Wie insbesondere aus Figur 2a, 2b hervorgeht erstreckt sich die zumindest eine Zuleitung 19, 20 von außen durch den Reinigungsraum 27 hindurch bis in den Speicherraum 18 hinein. Des Weiteren umfasst die Speichervorrichtung 10 zwei Reinigungseinheiten 25, 44. Auch die zweite Reinigungseinheit 44 ist gemäß der vorangegangenen Beschreibung ausgebildet, wobei die genannten Merkmale einzeln oder in beliebiger Kombination vorhanden sein können. Des Weiteren umfasst die Speichervorrichtung 10 eine zweite Trennwand 45 mit der die zweite Reinigungseinheit 44 vom gemeinsamen Speicherraum 18 abgetrennt ist.

Bei der in Figur 2a, 2b und 3 dargestellten Vorrichtung 9 wird somit von einer pneumatischen Fördervorrichtung 12, wie sie beispielsweise in der in Figur 1 dargestellten Textilanlage 1 gezeigt ist, über die zumindest eine Zuleitung 19 Fasermaterial 2 in den Speicherraum 18 transportiert, insbesondere eingeblasen. Das Fasermaterial 2 weist neben den Fasern 22 Verunreinigungen 23 auf. Aufgrund der Schwerkraft setzen sich die Fasern 22 im unteren Bereich des Speicherschachts 11 ab. Im oberen Bereich des Speicherschachts 11 tritt die Förderluft 21 über die Trennwand 28 gemäß dem durch Pfeile angedeuteten Förderluftstrom 29 in den Reinigungsraum 27 ein. Hierbei nimmt die Förderluft 21 die Verunreinigungen 23 mit, wohingegen die Fasern 22 durch die Trennwand 28 im Speicherraum 18 zurückgehalten werden.

Über das Filterelement 32 tritt die Förderluft 21 in die Umgebung 24 hinaus. Hierbei wird die Blasenergie der vorliegend nicht dargestellten pneumatischen Fördervorrichtung 12 genutzt. Das Filterelement 32 hält die Verunreinigungen 23 im Reinigungsraum 27 zurück. Die in dem Reinigungsraum 27 zurückgehaltenen Verunreinigungen 23 setzen sich aufgrund der Schwerkraft im Sammelraum 36 der Reinigungseinheit 25 ab.

Die sich nun im Sammelraum 36 befindenden Verunreinigungen 23 werden über die pneumatische Transporteinrichtung 40 mit dem in Figur 3 dargestellten Entsorgungsluftstrom 42 aus der Entsorgungsöffnung 31 ausgeblasen. Vorteilhafterweise kann die Reinigungseinheit 25 somit sehr kostengünstig und sparsam betrieben werden, da bereits ein sehr großes Luftvolumen durch das Filterelement 32 in die Umgebung 24 austreten kann. Infolgedessen muss nur ein im Vergleich dazu sehr geringeres Luftvolumen von der Transporteinrichtung 40 aus der Entsorgungsöffnung 31 bewegt werden.

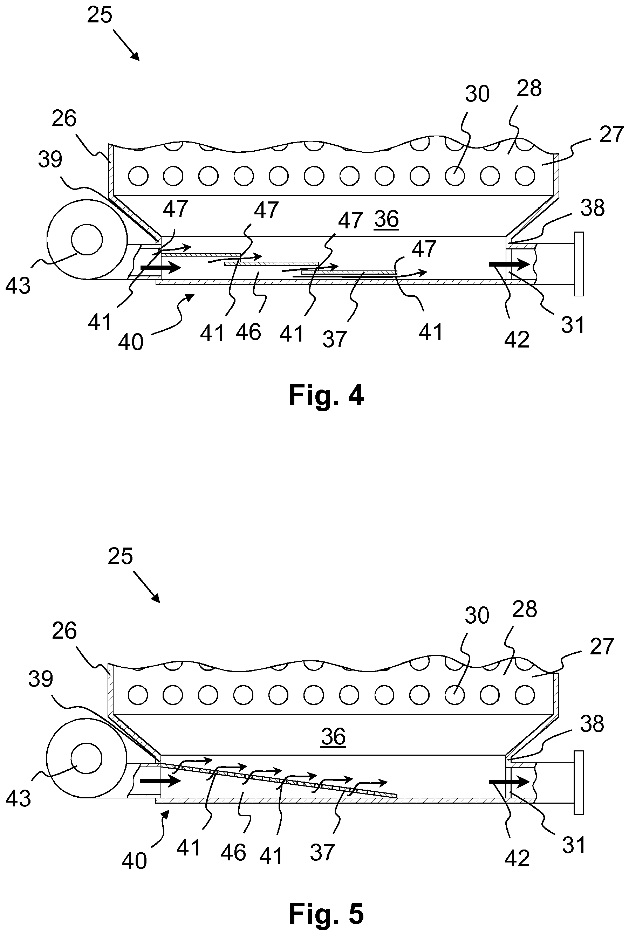

In den Figuren 4 und 5 sind in einer Detailansicht zwei unterschiedliche Ausführungsformen für die Anordnung der zumindest einen Blasöffnung 41 dargestellt. In beiden Ausführungsbeispielen befindet sich die Entsorgungsöffnung 31 an einer ersten Sammelraumwand 38. Der Ventilator 43 tritt über eine der ersten Sammelraumwand 38 gegenüberliegende zweite Sammelraumwand 39 in den Sammelraum 36 ein. In beiden Ausführungsbeispielen umfasst die Reinigungseinheit 25 einen Luftzuführraum 46. Dieser ist auf der Rückseite des Sammelraumbodens 37, insbesondere zwischen dem Reinigungsgehäuse 26 und dem Sammelraumboden 37, ausgebildet. Der Ventilator 43 steht über diesen Luftzuführraum 46 mit den Blasöffnungen 41 in Wirkverbindung. Sowohl in dem in Figur 4 als auch in dem in Figur 5 dargestellten Ausführungsbeispiel sind mehrere Blasöffnungen 41 im Sammelraumboden 37 ausgebildet. Diese stellen eine Wirkverbindung zwischen dem rückseitigen Luftzuführraum 46 und dem vorderseitigen Sammelraum 36 her.

Gemäß dem in Figur 4 dargestellten Ausführungsbeispiel ist der Sammelraumboden 37 gestuft ausgebildet. So weist der Sammelraumboden 37 mehrere Stufen 47 auf. Der stufenförmige Sammelraumboden 37 fällt in Richtung der Entsorgungsöffnung 31 ab. An den Stirnseiten der jeweiligen Stufen 37 ist zumindest eine Blasöffnung 41 angeordnet. Die Blasöffnungen 41 zeigen in Richtung der Entsorgungsöffnung 31. Hierdurch kann der Entsorgungsluftstrom 42 direkt in Richtung der Entsorgungsöffnung 31 geleitet werden.

Alternativ kann der Sammelraumboden 37 schräg verlaufen und/oder zur Entsorgungsöffnung 31 hin abfallen. Auch durch diese Schrägstellung kann der Entsorgungsluftstrom 42 in Richtung der Entsorgungsöffnung 31 gelenkt werden. Vorliegend ist der Sammelraumboden 37 vorzugsweise als Lochblech ausgebildet, wobei die Löcher des Lochblechs die jeweiligen Blasöffnungen 41 ausbilden.

Die in Figur 4 und 5 dargestellten Merkmale des Sammelraumbodens 37 könnten auch kombiniert werden. So könnte der Sammelraumboden 37 in einem Abschnitt Stufen aufweisen und/oder in diesem oder in einem anderen Abschnitt geneigt sein. Auch könnte die Stufung des Sammelraumbodens 37 aus zumindest einem Lochblech hergestellt sein.

In einer vorliegend nicht dargestellten alternativen Ausführungsform kann die Transporteinrichtung 40 auch als mechanische Transporteinrichtung ausgebildet sein, wobei diese dann vorzugsweise ein motorisch betriebenes Förderband umfasst, das vorzugsweise zumindest einen Teil des Sammelraumbodens 37 bildet. Das Förderband ist gegenüber der Entsorgungsöffnung 31 derart angeordnet, dass über das Förderband die Verunreinigungen aus der Entsorgungsöffnung 31 transportiert werden können.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Textilanlage
- 2: Fasermaterial
- 3: Ballenöffner
- 4: Mischöffner
- 5: Rohrleitung
- 6: Feinöffner
- 7: Füllschachtspeiser
- 8: Krempel
- 9: Vorrichtung zum Vorbereiten
- 10: Speichervorrichtung
- 11: Speicherschacht
- 12: pneumatische Fördervorrichtung
- 13: Bearbeitungseinheit
- 14: Speisewalze
- 15: Öffnerwalze
- 16: Abzugswalze
- 17: Schachtgehäuse
- 18: Speicherraum
- 19: erste Zuleitung
- 20: zweite Zuleitung
- 21: Förderluft
- 22: Fasern
- 23: Verunreinigungen
- 24: Umgebung
- 25: erste Reinigungseinheit
- 26: Reinigungsgehäuse
- 27: Reinigungsraum
- 28: erste Trennwand
- 29: Förderluftstrom
- 30: Trennwandlöcher
- 31: Entsorgungsöffnung
- 32: Filterelement
- 33: Außenwand
- 34: Traggitter
- 35: Filterplatte
- 36: Sammelraum
- 37: Sammelraumboden
- 38: erste Sammelraumwand
- 39: zweiten Sammelraumwand
- 40: Transporteinrichtung
- 41: Blasöffnung
- 42: Entsorgungsluftstrom
- 43: Ventilator
- 44: zweite Reinigungseinheit
- 45: zweite Trennwand
- 46: Luftzuführraum
- 47: Stufe
- 48: gemeinsame Seitenwand

## Patentansprüche

1. Speichervorrichtung (10) für eine Vorrichtung (9) zum Vorbereiten und/oder Speisen von Fasermaterial, insbesondere zur Vliesherstellung,
mit einem Speicherschacht (11) zum Zwischenspeichern von Fasermaterial (2), der ein Schachtgehäuse (17) mit einem Speicherraum (18) und eine in den Speicherraum (18) führende Zuleitung (19) aufweist, über die das Fasermaterial (2) pneumatisch mit einer Förderluft (21) in den Speicherraum (18) förderbar ist,
mit einer Reinigungseinheit (25) zum Reinigen der im Speicherraum (18) befindlichen verunreinigten Förderluft (21), die ein Reinigungsgehäuse (26) mit einem Reinigungsraum (27) umfasst, und
mit einer im Förderluftstrom (29) zwischen dem Speicherraum (18) und dem Reinigungsraum (27) angeordneten teildurchlässigen Trennwand (28), die das Fasermaterial (2) im Speicherraum (18) zurückhält und die verunreinigte Förderluft (21) in den Reinigungsraum (27) einströmen lässt,
wobei die Reinigungseinheit (25) ein im Förderluftstrom (29) zwischen dem Reinigungsraum (27) und der Umgebung (24) angeordnetes Filterelement (32) aufweist, über das Verunreinigungen (23) der Förderluft (21) im Reinigungsraum (27) zurückgehalten werden können und die gefilterte Förderluft (21) in die Umgebung (24) austreten kann, und das Reinigungsgehäuse (26) einen bodenseitigen Sammelraum (36) aufweist, der unterhalb des Reinigungsraums (27) angeordnet ist, so dass sich die vom Filterelement (32) im Reinigungsraum (27) zurückgehaltenen Verunreinigungen (23) durch die Schwerkraft im Sammelraum (36) absetzen,
**dadurch gekennzeichnet,**
**dass** der Sammelraum (36) eine aus dem Reinigungsgehäuse (26) austretende Entsorgungsöffnung (31) aufweist, über die die Verunreinigungen (23) aus dem Sammelraum (36) abführbar sind und
**dass** die Reinigungseinheit (25) eine Transporteinrichtung (40) aufweist, mit der die Verunreinigungen (23) über die Entsorgungsöffnung (31) aus dem Sammelraum (36) abführbar sind.

2. Speichervorrichtung nach dem vorherigen Anspruch, **dadurch gekennzeichnet, dass** die Entsorgungsöffnung (31) an einer ersten Sammelraumwand (38) angeordnet ist.

3. Speichervorrichtung nach einem oder mehreren der vorherigen Ansprüche, **dadurch gekennzeichnet, dass** die Transporteinrichtung (40) als pneumatische und/oder mechanische Transporteinrichtung (40) ausgebildet ist.

4. Speichervorrichtung nach dem vorherigen Anspruch 3, **dadurch gekennzeichnet, dass** die pneumatische Transporteinrichtung (40) zumindest eine Blasöffnung (41) aufweist, über die ein Entsorgungsluftstrom (42) in den Sammelraum (36) einführbar ist.

5. Speichervorrichtung nach dem vorherigen Anspruch 4, **dadurch gekennzeichnet, dass** die zumindest eine Blasöffnung (41) in Bezug zur Entsorgungsöffnung (31) derart ausgerichtet ist, dass der Entsorgungsluftstrom (42) in Richtung der Entsorgungsöffnung (31) orientiert und/oder gerichtet ist.

6. Speichervorrichtung nach einem oder mehreren der vorherigen Ansprüche 4 bis 5, **dadurch gekennzeichnet, dass** die zumindest eine Blasöffnung (41) an einer zweiten Sammelraumwand (39) und/oder an einem Sammelraumboden (37) des Sammelraums (36) angeordnet ist.

7. Speichervorrichtung nach dem vorherigen Anspruch 6, **dadurch gekennzeichnet, dass** der Sammelraumboden (37) zumindest in einem Abschnitt geneigt ist und/oder zur Entsorgungsöffnung (31) hin schräg verläuft.

8. Speichervorrichtung nach einem oder mehreren der vorherigen Ansprüche 6 bis 7, **dadurch gekennzeichnet, dass** der Sammelraumboden (37) zumindest in einem Abschnitt aus einem Lochblech mit einer Vielzahl von Blasöffnungen (41) ausgebildet ist.

9. Speichervorrichtung nach einem oder mehreren der vorherigen Ansprüche 6 bis 8, **dadurch gekennzeichnet, dass** der Sammelraumboden (37) zumindest eine Stufe (47) aufweist, die in Richtung der Entsorgungsöffnung (31) zeigt und/oder in der die zumindest eine Blasöffnung (41) ausgebildet ist.

10. Speichervorrichtung nach einem oder mehreren der vorherigen Ansprüche 4 bis 9, **dadurch gekennzeichnet, dass** die pneumatische Transporteinrichtung (40) einen Ventilator (43) zum Erzeugen des Entsorgungsluftstroms (42) aufweist, der mit der zumindest einen Blasöffnung (41) in Wirkverbindung steht.

11. Speichervorrichtung nach einem oder mehreren der vorherigen Ansprüche, **dadurch gekennzeichnet, dass** die Trennwand (28) ein Lochblech ist und/oder zumindest einen Teil einer gemeinsamen Seitenwand (48) des Schachtgehäuses (17) und des Reinigungsgehäuses (26) ausbildet.

12. Speichervorrichtung nach einem oder mehreren der vorherigen Ansprüche, **dadurch gekennzeichnet, dass** das Filterelement (32) an einer insbesondere der Trennwand (28) gegenüberliegenden Außenwand (33) des Reinigungsgehäuses (26) angeordnet ist und/oder diese zumindest teilweise ausbildet.

13. Speichervorrichtung nach einem oder mehreren der vorherigen Ansprüche, **dadurch gekennzeichnet, dass** die Speichervorrichtung (10) zwei, insbesondere zueinander symmetrisch und/oder gegenüberliegend angeordnete, Reinigungseinheiten (25, 44) aufweist, die vom Speicherraum (18) vorzugsweise jeweils über eine separate Trennwand (28, 45) getrennt sind.

14. Vorrichtung (9) zum Vorbereiten und/oder Speisen von Fasermaterial (2) für eine Textilanlage (1), insbesondere zur Vliesherstellung,
mit einer Speichervorrichtung (10) zum Zwischenspeichern des Fasermaterials (2),
**dadurch gekennzeichnet,**
**dass** die Speichervorrichtung (10) nach einem oder mehreren der vorherigen Ansprüche ausgebildet ist.

## Claims

1. A storage device (10) for a device (9) for preparing and/or feeding fiber material, in particular, for web manufacturing,
comprising a storage chute (11) for the interim storage of fiber material (2), which includes a chute housing (17) comprising a storage chamber (18) and a supply line (19) leading into the storage chamber (18), via which the fiber material (2) can be pneumatically conveyed with the aid of conveying air (21) into the storage chamber (18),
comprising a cleaning unit (25) for cleaning the contaminated conveying air (21) situated in the storage chamber (18), which comprises a cleaning housing (26) including a cleaning chamber (27), and
comprising a semipermeable dividing wall (28) situated in the conveying air flow (29) between the storage chamber (18) and the cleaning chamber (27), which retains the fiber material (2) in the storage chamber (18) and allows the contaminated conveying air (21) to flow into the cleaning chamber (27),
wherein the cleaning unit (25) comprises a filter element (32) situated in the conveying air flow (29) between the cleaning chamber (27) and the surroundings (24), via which the contamination (23) in the conveying air (21) can be retained in the cleaning chamber (27) and the filtered conveying air (21) can escape into the surroundings (24),
and the cleaning housing (26) comprises, at the bottom thereof, a collection chamber (36) which is situated underneath the cleaning chamber (27), and so the contamination (23) retained by the filter element (32) in the cleaning chamber (27) settles, due to the force of gravity, in the collection chamber (36)
**characterized in that**
the collection chamber (36) comprises a disposal opening (31) leading out of the cleaning housing (26), via which the contamination (23) can be removed from the collection chamber (36) and
the cleaning unit (25) comprises a transport unit (40), with the aid of which the contamination (23) can be removed from the collection chamber (36) via the disposal opening (31).

2. The storage device as claimed in the preceding claim, **characterized in that** the disposal opening (31) is located on a first collection chamber wall (38).

3. The storage device as claimed in one or more of the preceding claims, **characterized in that** the transport unit (40) is designed as a pneumatic and/or mechanical transport device (40).

4. The storage device as claimed in the preceding claim 3, **characterized in that** the pneumatic transport unit (40) comprises at least one blow opening (41), via which a disposal air flow (42) can be introduced into the collection chamber (36).

5. The storage device as claimed in the preceding claim 4, **characterized in that** the at least one blow opening (41) is oriented relative to the disposal opening (31) in such a way that the disposal air flow (42) is oriented and/or directed in the direction of the disposal opening (31).

6. The storage device as claimed in one or more of the preceding claims 4 to 5, **characterized in that** the at least one blow opening (41) is located on a second collection chamber wall (39) and/or on a collection chamber base (37) of the collection chamber (36).

7. The storage device as claimed in the preceding claim 6, **characterized in that** the collection chamber base (37) is slanted at least in one section and/or extends obliquely toward the disposal opening (31).

8. The storage device as claimed in one or more of the preceding claims 6 to 7, **characterized in that** the collection chamber base (37) is formed, at least in one section, from a perforated plate comprising a plurality of blow openings (41).

9. The storage device as claimed in one or more of the preceding claims 6 to 8, **characterized in that** the collection chamber base (37) comprises at least one step (47) which points in the direction of the disposal opening (31) and/or in which the at least one blow opening (41) is formed.

10. The storage device as claimed in one or more of the preceding claims 4 to 9, **characterized in that** the pneumatic transport unit (40) comprises a ventilator (43) for generating the disposal air flow (42), which is operatively connected to the at least one blow opening (41).

11. The storage device as claimed in one or more of the preceding claims, **characterized in that** the dividing wall (28) is a perforated plate and/or forms at least one portion of a common side wall (48) of the chute housing (17) and of the cleaning housing (26).

12. The storage device as claimed in one or more of the preceding claims, **characterized in that** the filter element (32) is situated on an outer wall (33), in particular opposite the dividing wall (28), of the cleaning housing (26) and/or at least partially forms the outer wall (33).

13. The storage device as claimed in one or more of the preceding claims, **characterized in that** the storage device (10) comprises two cleaning units (25, 44), which are situated, in particular, symmetrically with respect to one another and/or opposite one another, and are preferably each separated from the storage chamber (18) via a separate dividing wall (28, 45).

14. A device (9) for preparing and/or feeding fiber material (2) for a textile installation (1), in particular, for web manufacturing, comprising a storage device (10) for the interim storage of the fiber material (2),
**characterized in that**
the storage device (10) is designed as claimed in one or more of the preceding claims.

## Revendications

1. Dispositif de stockage (10) pour un dispositif (9) de préparation et/ou d'alimentation de matière fibreuse, en particulier pour la fabrication de non-tissés,
avec un puits de stockage (11) pour le stockage intermédiaire de matière fibreuse (2), qui présente un carter (17) de puits avec un espace de stockage (18) et une conduite d'amenée (19) menant dans l'espace de stockage (18), par laquelle la matière fibreuse (2) peut être transportée pneumatiquement, avec un air de transport (21), dans l'espace de stockage (18),
avec une unité de nettoyage (25) pour nettoyer l'air de transport (21) souillé se trouvant dans l'espace de stockage (18), qui comprend un carter de nettoyage (26) avec un espace de nettoyage (27), et
avec une paroi de séparation (28) partiellement perméable, disposée dans le courant d'air de transport (29) entre l'espace de stockage (18) et l'espace de nettoyage (27), qui retient la matière fibreuse (2) dans l'espace de stockage (18) et laisse l'air de transport (21) souillé s'écouler dans l'espace de nettoyage (27),
dans lequel l'unité de nettoyage (25) présente un élément filtrant (32) disposé dans le courant d'air de transport (29) entre l'espace de nettoyage (27) et l'environnement (24), par l'intermédiaire duquel des impuretés (23) de l'air de transport (21) peuvent être retenues dans l'espace de nettoyage (27) et l'air de transport (21) filtré peut sortir dans l'environnement (24), et
le carter de nettoyage (26) présente un espace de collecte (36) côté fond, qui est disposé en dessous de l'espace de nettoyage (27), de sorte que les impuretés (23) retenues par l'élément filtrant (32) dans l'espace de nettoyage (27) se déposent dans l'espace de collecte (36) sous l'effet de la gravité,
**caractérisé en ce que**
l'espace de collecte (36) présente une ouverture d'évacuation (31) sortant du carter de nettoyage (26), par laquelle les impuretés (23) peuvent être évacuées de l'espace de collecte (36) et
**en ce que** l'unité de nettoyage (25) présente un dispositif de transport (40) avec lequel les impuretés (23) peuvent être évacuées de l'espace de collecte (36) par l'ouverture d'évacuation (31).

2. Dispositif de stockage selon la revendication précédente, **caractérisé en ce que** l'ouverture d'évacuation (31) est disposée sur une première paroi d'espace de collecte (38).

3. Dispositif de stockage selon l'une quelconque ou plusieurs des revendications précédentes, **caractérisé en ce que** le dispositif de transport (40) est conçu comme un dispositif de transport (40) pneumatique et/ou mécanique.

4. Dispositif de stockage selon la revendication 3 précédente, **caractérisé en ce que** le dispositif de transport (40) pneumatique présente au moins une ouverture de soufflage (41), par laquelle un courant d'air d'évacuation (42) peut être introduit dans l'espace de collecte (36).

5. Dispositif de stockage selon la revendication 4 précédente, **caractérisé en ce que** ladite, au moins une, ouverture de soufflage (41) est orientée par rapport à l'ouverture d'évacuation (31) de sorte que le courant d'air d'évacuation (42) est orienté et/ou dirigé vers l'ouverture d'évacuation (31).

6. Dispositif de stockage selon l'une quelconque ou plusieurs des revendications 4 à 5 précédentes, **caractérisé en ce que** ladite, au moins une, ouverture de soufflage (41) est disposé sur une deuxième paroi (39) d'espace de collecte et/ou sur un fond (37) de l'espace de collecte (36).

7. Dispositif de stockage selon la revendication 6 précédente, **caractérisé en ce que** le fond (37) d'espace de collecte est incliné au moins dans une section et/ou est incliné vers l'ouverture d'évacuation (31).

8. Dispositif de stockage selon l'une quelconque ou plusieurs des revendications 6 à 7 précédentes, **caractérisé en ce que** le fond (37) d'espace de collecte est formé au moins dans une section d'une tôle perforée comportant une pluralité d'ouvertures de soufflage (41).

9. Dispositif de stockage selon l'une quelconque ou plusieurs des revendications 6 à 8 précédentes, **caractérisé en ce que** le fond (37) d'espace de collecte comporte au moins un gradin (47) qui est orienté vers l'ouverture d'évacuation (31) et/ou dans lequel est formé ladite, au moins une, ouverture de soufflage (41).

10. Dispositif de stockage selon l'une quelconque ou plusieurs des revendications 4 à 9 précédentes, **caractérisé en ce que** le dispositif de transport (40) pneumatique comprend un ventilateur (43) pour générer le courant d'air d'évacuation (42), qui est en liaison fonctionnelle avec ladite, au moins une, ouverture de soufflage (41).

11. Dispositif de stockage selon l'une quelconque ou plusieurs des revendications précédentes, **caractérisé en ce que** la paroi de séparation (28) est une tôle perforée et/ou forme au moins une partie d'une paroi latérale (48) commune du carter (17) de puits et du carter de nettoyage (26).

12. Dispositif de stockage selon l'une quelconque ou plusieurs des revendications précédentes, **caractérisé en ce que** l'élément filtrant (32) est disposé sur une paroi extérieure (33) du carter de nettoyage (26), notamment opposée à la paroi de séparation (28), et/ou forme au moins partiellement cette dernière.

13. Dispositif de stockage selon l'une quelconque ou plusieurs des revendications précédentes, **caractérisé en ce que** le dispositif de stockage (10) présente deux unités de nettoyage (25, 44), en particulier symétriques et/ou disposées opposées l'une à l'autre, qui sont séparées de l'espace de stockage (18), de préférence chacune par une paroi de séparation (28, 45) distincte.

14. Dispositif (9) pour la préparation et/ou l'alimentation de matière fibreuse (2) pour une installation textile (1), en particulier pour la fabrication de non-tissés,
avec un dispositif de stockage (10) pour le stockage intermédiaire de la matière fibreuse (2),
**caractérisé en ce que**
le dispositif de stockage (10) est conçu selon l'une quelconque ou plusieurs des revendications précédentes.
